(19) **Europäisches Patentamt**

**European Patent Office**

**Office européen des brevets**

(11) Veröffentlichungsnummer: **0 231 398 B1**

(12) **EUROPÄISCHE PATENTSCHRIFT**

(45) Veröffentlichungstag der Patentschrift:
**14.09.88**

(21) Anmeldenummer: **85116647.0**

(22) Anmeldetag: **06.02.86**

(51) Int. Cl.⁴: $B\ 29\ B\ 7/62$, $B\ 29\ B\ 7/56$

(54) Kontinuierliches Misch- und Scherwalzwerk.

(43) Veröffentlichungstag der Anmeldung:
**12.08.87 Patentblatt 87/33**

(45) Bekanntmachung des Hinweises auf die Patenterteilung:
**14.09.88 Patentblatt 88/37**

(84) Benannte Vertragsstaaten:
**AT BE CH DE FR GB IT LI LU NL SE**

(56) Entgegenhaltungen:
**EP - A - 0 148 966**
**CH - A - 391 281**
**US - A - 2 286 405**
**US - A - 2 663 901**
**US - A - 2 940 350**

(73) Patentinhaber: **Albers, August, Dr.-Ing., Grissheimer Weg 7, D-7843 Heitersheim (DE)**

(72) Erfinder: **Albers, August, Dr.-Ing., Grissheimer Weg 7, D-7843 Heitersheim (DE)**

(74) Vertreter: **Thoma, Friedrich Xaver, Buchenstrasse 20, D-7612 Haslach i.K. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein kontinuierliches Misch- und Scherwalzwerk für plastifizierbares Material mit den Merkmalen nach dem ersten Teil des Patentanspruchs 1.

Aus der E-PA-0 148 966 ist ein kontinuierliches Misch- und Scherwalzwerk für plastifizierbares Material mit zwei, mit unterschiedlicher Umfangsgeschwindigkeit gegenläufig rotierenden temperierten Walzen bekannt, deren Walzenlänge mehr als das Vierfache des Walzendurchmessers beträgt und auf denen im spitzen Winkel zu den Walzenachsen scharfkantige Nuten gegenläufig zueinander angeordnet sind, wobei die Zahl der Nuten entlang den Walzenachsen von der Lagerseite mit der Materialaufgabe bis zur Walzenmitte zunimmt und von dort bis zur Lagerseite mit der Materialabnahme wieder abnimmt und wobei Materialaufgabe- und -abnahmevorrichtungen für verschiedene Materialtypen und Zugabestoffe angeordnet sind, welche in axialer Richtung entlang dem Walzenspalt verstellbar sind.

Der Erfindung liegt die Aufgabe zugrunde dieses, aus der EP-A-0 148 966 bekanntgewordene kontinuierliche Misch- und Scherwalzwerk weiterzuentwickeln, um eine optimale Scherkrafteinwirkung auf das Material zu erzielen.

Diese Aufgabe wird mit den Merkmalen im kennzeichnenden Teil des Patentanspruchs gelöst. Versuche ergaben, dass das Schmelzverhalten der zu bearbeitenden Werkstoffe sehr verschieden ist.

Entsprechend gibt es für jeden Werkstoff in den verschiedenen Zustandsformen fest, plastisch oder flüssig jeweils eine optimale Nutgeometrie, eine optimale Temperatur und eine optimale Scherkrafteinwirkung auf das Material.

So ist es vorgesehen, dass das Friktionsverhältnis der beiden Scher-Walzen in Anpassung an das Plastifizierverhalten des Werkstoffs in einem kurzen Rhythmus durch eine gesteuerte Drehzahländerung der Walzen periodisch erheblich verändert wird.

Während der Bearbeitungszeit bewegt sich ein Materialpartikel zum Beispiel in 60 bis 250 Sekunden von der Aufgabeseite hin zur Abnahmeseite. Das Drehzahlverhalten wird periodisch der beiden Scherwalzen im Verhältnis von 5:1 bis 1:5 in einem Zeitrhythmus von z.B. 5 bis 50 Sekunden geändert.

Entsprechend wird das Materialpartikelchen auf seinem Weg in dem Knetwulst und auf der Walze mehrfach zusätzlich erheblich sich ändernden Scherkräften ausgesetzt.

Äusserlich erkennt man die Wirkung dieser Massnahme auch an der wechselnden Grösse und Rotationsrichtung des Materialknetes im Scherspalt.

In einer weiteren vorteilhaften Ausgestaltung werden die beiden Scher-Walzen entlang dem Weg des Materials mit unterschiedlichen Temperierzonen ausgestattet. Bei kleineren Maschinen sind entlang der Ballenlänge der Walzen wenigstens, zwei bei grösseren Walzen (etwa ab 1500 mm Ballenlänge) mindestens drei verschiedene Temperaturzonen vorteilhaft. Sie werden durch getrennte Zu- und Ableitungen der verschiedenen temperierten Flüssigkeiten erreicht.

Ausführungsbeispiele der Erfindung sind in den Zeichnungen dargestellt und werden im folgenden näher erläutert. Es zeigen

Fig. 1 eine Längsschnittansicht durch ein temperiertes Walzenpaar eines kontinuierlichen Misch- und Scherwalzwerkes,

Fig. 2 eine Ansicht auf ein Walzenpaar mit einer materialbedeckten Walze,

Fig. 2a eine Draufsicht auf das Walzenpaar nach Fig. 2,

Fig. 3 eine Draufsicht auf ein Walzenpaar mit einer mit Sacklöchern versehenen Walze,

Fig. 3a ein Querschnitt im Bereich des Walzenspaltes durch das Walzenpaar nach Fig. 3,

Fig. 4 eine Ansicht auf ein Walzenpaar mit einer materialbedeckten Walze,

Fig. 4a eine Draufsicht auf das Walzenpaar nach Fig. 4 mit zonenweisen Nutenabschnitten mit einer Gegensteigung,

Fig. 5 eine Ansicht auf ein Walzenpaar mit einer materialbedeckten Walze,

Fig. 5a eine Draufsicht auf das Walzenpaar nach Fig. 5 mit zwei Gegenförderabschnitten auf einer Walze.

Fig. 6 eine Draufsicht auf ein Walzenpaar mit auf beiden Walzen flexibel aufgereihten von verschieden genuteten Mantelabschnitten für die verschiedenen Materialien,

Fig. 6a eine Längsschnittansicht durch die Walze 32 nach Fig. 6,

Fig. 7 eine Draufsicht auf ein Walzenpaarabschnitt im Bereich der Abnahmezone mit einer dort wirksamen Streifenschneidwalze mit einer Querschneidvorrichtung zur Herstellung von Würfelgranulat,

Fig. 7a eine Seitenansicht auf die Einrichtung nach Fig. 7,

Fig. 8 eine Draufsicht auf ein Walzenpaarabschnitt im Bereich der Abnahmezone mit einer dort wirksam angeordneten Granulierzylinder zu Herstellung von Zylindergranulat,

Fig. 8a eine Seitenansicht auf eine Einrichtung nach Fig. 8,

Fig. 9 eine Draufsicht auf ein Walzenpaarabschnitt im Bereich der Abnahmezone mit einer dort wirksam angeordneten Abnahme- und Ausformschnecke zur Herstellung von Granulat und

Fig. 9a eine zum Teil geschnittene Seitenansicht auf die Einrichtung nach Fig. 9.

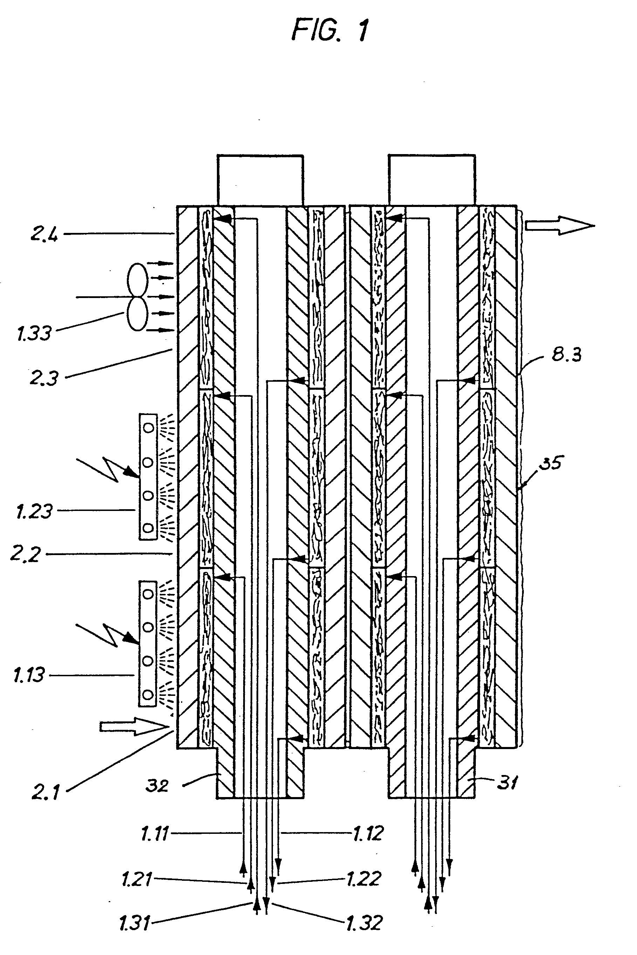

Wie die Fig. 1 zeigt, werden auf der Aufgabenseite 2.1 des Materials 8.3 die Walzenabschnitte so beheizt, dass das zu bearbeitende Material 8.3 an der Oberfläche der Walze 31 haftet.

In der Fig. 1 wird der Walzenabschnitt der Aufgabenseite 2.1 durch die Leitungen 1.11 und 1.12 temperiert. Fast immer muss dieser Abschnitt wesentlich höher geheizt werden als die Mittelzone 2.2 und die Zonen 2.3 und 2.4.

In vielen Fällen ist es nützlich mit einer Schutzheizung mit Infrarotstrahlern 1.13 die Erwärmung des Aufgabe-Materials 8.3 zu verstärken.

Im Walzenabschnitt der Mittelzone 2.2 entwikkelt sich bei einigen zähplastischen Materialien 8.3 durch Scherkräfte erhebliche Friktionswärme, die kontrolliert werden muss. Hierfür sind die innere zweite Temperierzone mit den Zu- und Ablaufleitungen 1.21 und 1.22 sowie die äussere Schutzheizung 1.23 vorgesehen.

Im dritten Walzenabschnitt der Zone 2.3 wird in den meisten Fällen eine Reduzierung der Materialtemperatur angesteuert, dadurch dass über die Leitungen dritte Temperaturzone 1.31 und 1.32 von innen Wärme abgeführt und von aussen eine Gebläsekühlung 1.33 angebracht werden.

Bei thermoplastischen Werkstoffen, die z.B. aus dem Pulver- oder Granulazustand aufgeschmolzen werden, hat sich eine erheblich verschiedene Nutgeometrie der beiden Scherwalzen als vorteilhaft erwiesen.

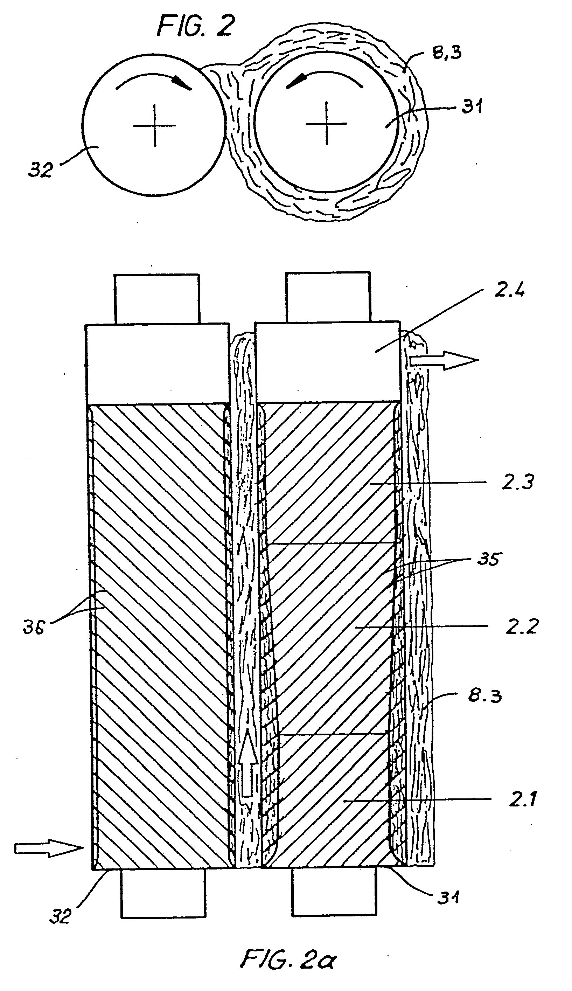

Die materialbedeckte vordere Walze 31 wird mit Nuten 35 ausgerüstet, deren Geometrie entlang der Ballenlänge erheblich verschieden ist, wie die Fig. 2a zeigt.

Im Bereich der Materialaufgabe 2.1 werden Nuten 35 von 0,5 bis 20 mm vorzugsweise 5 mm Tiefe und 1 bis 40, vorzugsweise 10 mm Breite eingearbeitet.

Sie werden über eine Länge von 25% bis 30% des Ballens gleichmässig tief eingeschnitten und bilden die Materialaufgabe- und Vorwärmzone 2.1 wie die Fig. 2a zeigt.

In der Mittelzone 2.2, der etwa 35% bis 40% der Ballenlänge ausmacht, wird die Tiefe der Nuten 35 kontinuierlich etwa auf den halben Wert der Materialaufgabezone 2.1 vorzugsweise auf 2,0 bis 2,5 mm Tiefe wie bei einer kernprogressiven Schnecke reduziert. Hierbei ist es bei einigen Materialien, die sehr zäh sind vorteilhaft, die Zahl der Nuten 35 zur Verbesserung des Materialtransports zu verdoppeln.

Im dritten Walzenabschnitt der Homogenisierungszone 2.3, der etwa 25% bis 30% der Ballenlänge ausmacht erfolgt die Homogenisierung und häufig Abkühlung des Materials 8.3. Die Tiefe der Nut 35 wird vom Auslauf der kernprogressiven Mittelzone 2.2 konstant bis zum Nutenauslauf weitergeführt.

Die Materialkühlung im dritten und vierten Walzenabschnitt, in der Homogenisierungszone 2.3 und der Abnahmezone 2.4 reduziert die Klebeneigung an den Walzen 31 und 32. Bei tieferen Temperaturen nimmt zusätzlich die Materialfestigkeit zu.

Hierdurch wird die Abnahme des Materials 8.3 als Streifen erleichtert und bei einer Granulierung das Zusammenhaften der Granulatkörner verhindert.

Die Abnahmezone 2.4 wird zweckmässigerweise mit ca. 10% bis 15% der Ballenlänge auf beiden Walzen 31 und 32 ohne Nuten 35 und 36 ausgeführt.

In den Versuchen zeigte sich, dass bei Materialien 8.3 mit höherem Schmelz- und Erweichungsbereichen mitunter die Erzeugung einer plastischen Materialbedeckung auf der Arbeitswalze 31 Probleme macht, solange die Materialtemperatur in der Aufgabezone 2.1 noch nicht hoch genug ist, um an den Nuten 35 und der Oberfläche eine genügende Materialhaftung zu bewirken. Nur in haftende plastische Materialschichten kann über Scherkräfte zusätzliche Friktionswärme eingeleitet werden. Hierbei lässt sich durch Friktion von Kunststoffschichten gegeneinander eine vielfach höhere Energieerzeugung erreichen, als bei Friktion von Kunststoff gegen Metalloberflächen.

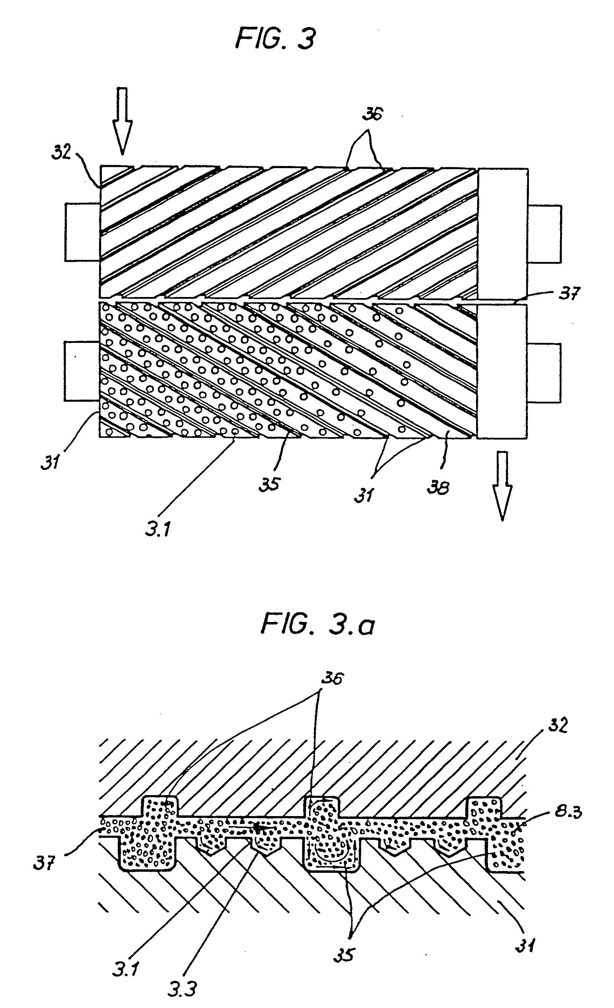

Aus dieser Beobachtung heraus werden im Aufgabe- und Mischbereich der Walze 31 die glatten Stegflächen 38 zwischen den Schräg-Nuten 35 mit einer Vielzahl von Sachlöchern 3.1 als Grübchen versehen, wie die Fig. 3 zeigt.

Ein kleiner zylindrischer Abschnitt der Bohrung mit 0,5 bis 10 mm Tiefe, insbesondere von 1 bis 2,5 mm Tiefe geht über in einen flachwinkeligen Lochgrund 3.3 (z.B. von 120° oder einer entsprechenden flachen Ausrundung des Lochgrundes 3.3).

Der Lochdurchmesser beträgt 2 bis 20 mm vorzugweise 3,5 bis 5 mm bei einer Gesamttiefe von ca. 2 bis 3 mm.

Das Verhältnis von Lochdurchmesser zur Lochtiefe ist so zu bemessen, dass einerseits durch eine etwas längere Verweilzeit des Materials 8.3 ein zeitweiliges Anhaften oder Anschmelzen des Materials 8.3 im Sackloch 3.1 erfolgt, auf der anderen Seite durch die Gegen-Walze 32 genügend neues kälteres Material 8.3 zum Austausch des Lochinhalts hineingedrückt wird.

Die eingebrachten Sacklöcher 3.1 verbessern die Haftung der Materialbedeckung der Walze 31 durch ein mechanisches Verklammern und bilden zusätzlich Wärmeaustauschflächen.

Beim Einlaufen des Sackloches 3.1 in den Knet-Spalt 37 der Walzen 31 und 32 baut sich der Spaltdruck in diesem Bereich voll auf, weil in dem geschlossenen System keine Druckentlastung stattfinden kann; entsprechend gross ist die örtlich durch Friktion einleitbare Scherenergie und Wirbelbewegung im Lochgrund 3.3, wie die Fig. 3a zeigt.

In schwierigen Fällen ist es sinnvoll auch die Stegflächen 38 der materialfreien Walze 32 mit Sacklöchern 3.1 der oben beschriebenen Art zu versehen. Sie dürfen jedoch bei gleichem Lochdurchmesser höchstens nur etwa halb so tief sein, wie die Sacklöcher 3.1 auf der Arbeits-Walze 31, damit sie die grössere Materialhaftung auf der Walze 31 nicht aufheben.

Das Scherwalzensystem funktioniert nur mit einer gegenläufig angetriebenen gleichfalls genuteten Walze 32, welche ohne Materialauflage den anderen Teil des Scher- oder Walzenspaltes 37 bildet.

Die Aufgabe der Nuten 36 in der Gegen-Walze 32 ist die Einleitung der Scherkräfte in die Aussenschicht der materialbedeckten vorderen Walze 31, das Einbringen von neuem Material 8.3 in diese Schicht und die Erzeugung der Materialschubkraft entlang des Materialknetes.

Die Tiefe der Nuten 36 der Gegen-Walze 32 wird sehr viel kleiner gehalten als bei der materialbedeckten vorderen Walze 31. Diese Nuttiefe liegt bei etwa der Hälfte des Arbeits- oder Walzenspaltes 37, z.B. zwischen 1 bis 3 mm. Die Nutung der Gegen-Walze 32 wird von der Aufgabezone 2.1 bis zum glatten Auslauf in der Abnahmezone 2.4 in einer Tiefe durchgeführt.

Mit Hilfe dieser Nuten 36 wird das Zugabe-Material 8.3 in den Walzenspalt 37 eingezogen und dort innig mit dem plastischen Material 8.3 vermischt, bzw. in die plastische Materialschicht 8.3 eingebettet. Über den Nutwinkel schieben diese Nuten 36 das Material 8.3 im Knet und auf der Arbeits-Walze 31 in Richtung der Abnahmeseite 2.4 vorwärts, wenn beide Walzen 31 und 32 gegenläufig angetrieben sind und auch einen gegenlaufigen Nutwinkel aufweisen.

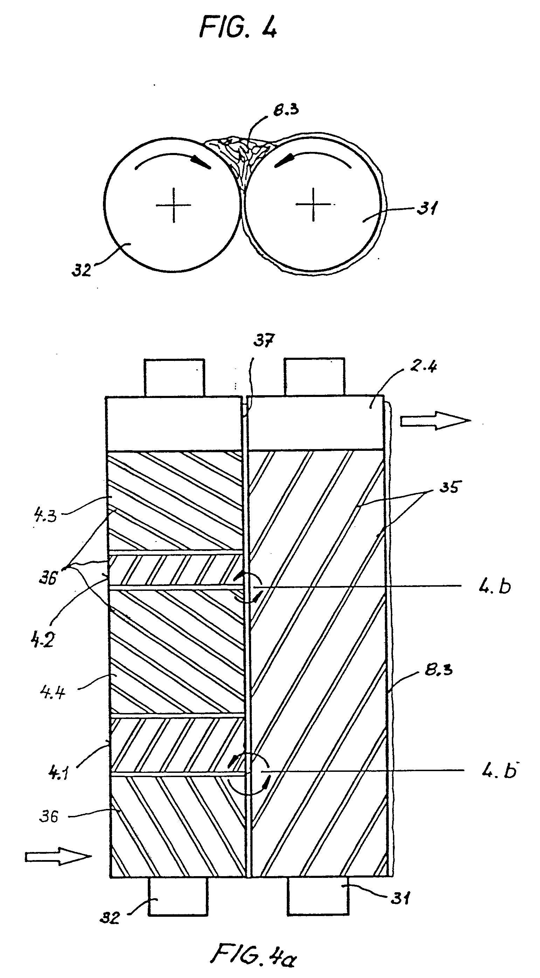

Versuche führten zu einem weiteren vorteilhaften Schritt, indem auf der Walze 32 zur Verstärkung der Mischwirkung zonenweise Nutenabschitte 4.2 mit einer Gegensteigung angeordnet werden, wie dies die Fig. 4 zeigt. Die Gegensteigung der Nutung erzeugen örtlich senkrecht zum Walzenspalt 37 gegenläufig rotierende Knetwirbel 4b, wie die Fig. 4a zeigt.

Die Zonen der Gegensteigung dürfen nur relativ kurz sein, weil sonst der gesamte Materialtransport im Knet- oder Walzenspalt 37 in Richtung zur Abnahmezone 2.4 zum Stillstand kommt.

In der Regel werden wenigstens zwei Gegenförderzonen 4.1 und 4.2 in der Walze 32 angeordnet, die jedoch nur eine Länge von 0,25 bis 1 mal Walzendurchmesser aufweisen sollten und zwischengelagerte Abschnitte mit starker Fördersteigung von mindestens ein bis zwei Walzendurchmesser Länge haben müssen.

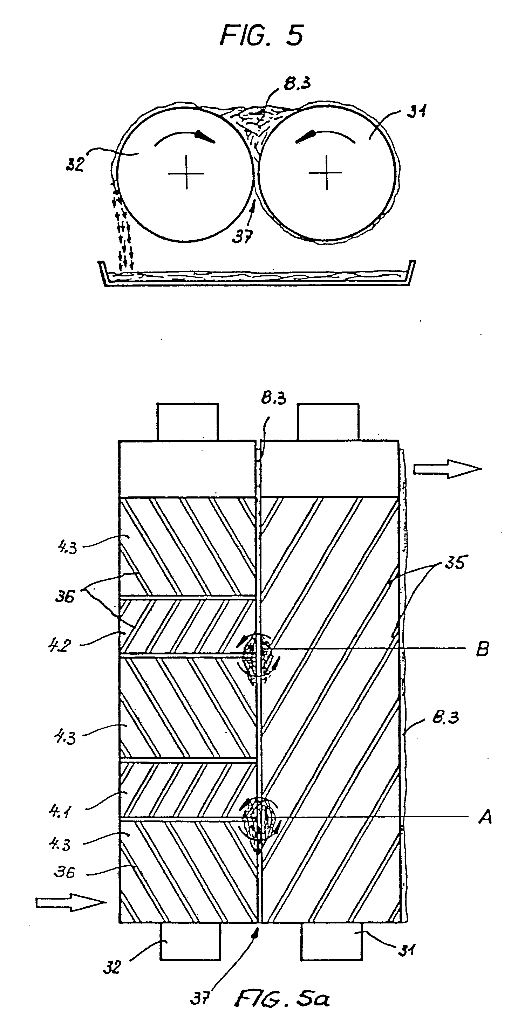

In Fig. 5 wird die Walze 32 mit zwei grösseren Gegenförderabschnitten 4.3 ausgerüstet. Während die Walze 31 mit Material 8.3 bedeckt ist, lässt man an den Punkten A und B jeweils eine Flüssigkeit z.B. Öl bei der Kautschukverarbeitung, oder einen flüssigen Stabilisator B in den Knet- oder Walzenspalt 37 laufen. Solange die beiden Walzen 31 und 32 sich drehen, wird die Flüssigkeit durch die gegenläufige Nutsteigerung gegeneinander gefördert und gelangt über den senkrechten Materialwirbel in das zu bearbeitende Material 8.3.

Es können auf diese Weise zwei Flüssigkeitsberge in den Spalt 37 aufrecht erhalten werden, die so hoch sind, dass die Überschussflüssigkeit seitlich über die Walzen 31, 32 treten kann und über eine Differenzverwiegung die aufgenommene Flüssigkeitsmenge erfasst werden kann.

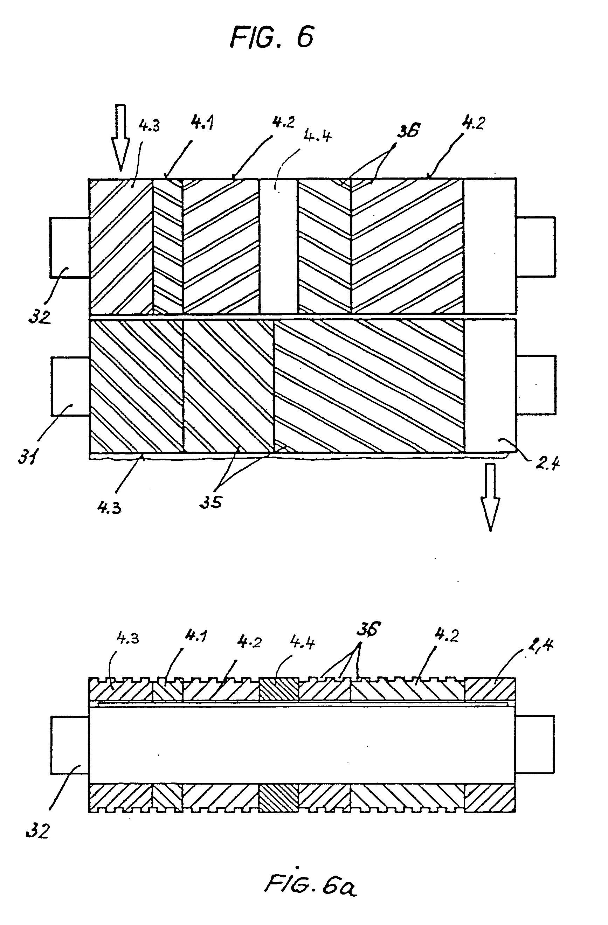

Aus den oben beschriebenen verschiedenen Schritten folgt, dass zur Optimierung der Walzen 31 und 32 eine Konstruktion entwickelt wurde, die es gestattet, durch flexibles Aufreihen von verschiedenen genuteten Mantelsegmenten 4.1, 4.2, 4.3, 4.4 für die verschiedenen Werkstoffe jeweils die optimale Nutgeometrie zu erproben, wie die Fig. 6 zeigt.

Hierbei werden auf den temperierten Walzenkernen axial die verschiedenen Mantelsegmente 4.1, 4.2, 4.3, 4.4 aufgereiht und erprobt, wobei die Walzen 31 und 32 nach Belieben mit den verschiedenen Segmenten bestückt werden können, wie aus der Fig. 6a ersichtlich ist.

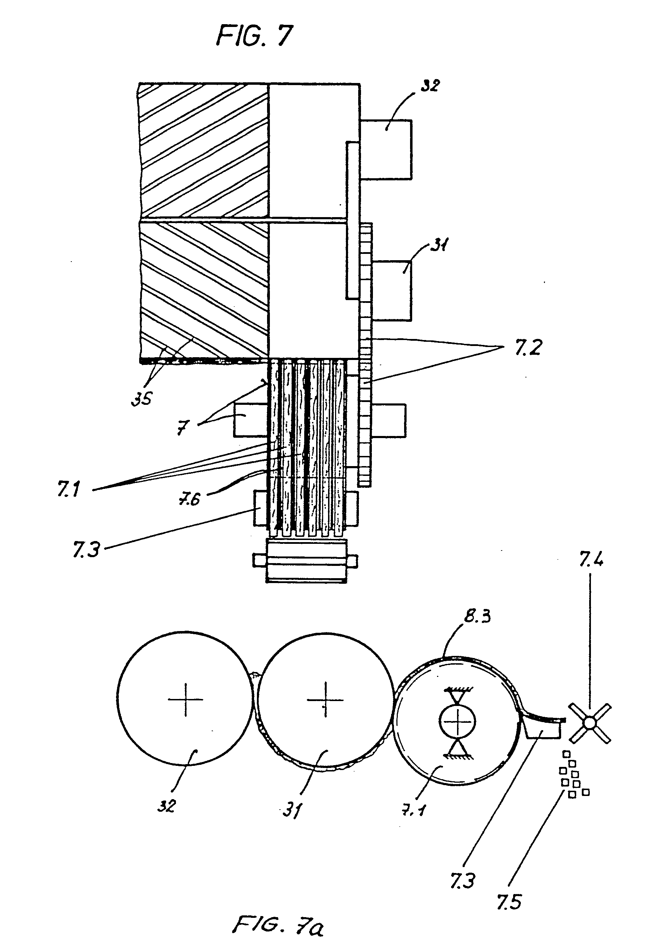

Für die Materialabnahme 2.4 laufen die Nuten 35, 36 in einem glatten Walzenabschnitt (2.4) mit etwa 10% der Ballenlänge aus. In diesem Bereich erfolgt die Abnahme des bearbeiteten Materials 8.3, wie die folgenden Figuren 7 bis 9a zeigen.

Die Materialabnahme als Streifen 7.1 geschieht mit einer Streifenschneidwalze 7, wie die Fig. 7 zeigt. Sie wird mit Rundmessern 7.6 bestückt und mit einem Zahnradpaar 7.2 von der Walze 31 aus mit etwas grösserer Geschwindigkeit angetrieben (ca. 5% bis 10% Vorlauf). Je nach Zahl der Rundmesser 7.6 werden mehrere Streifen 7.1 gleichzeitig erzeugt, die in einer Querschneidvorrichtung 7.4 mit Abnahmeblock 7.3 und Messerwalze zu Würfelgranulat 7.5 zerschnitten werden.

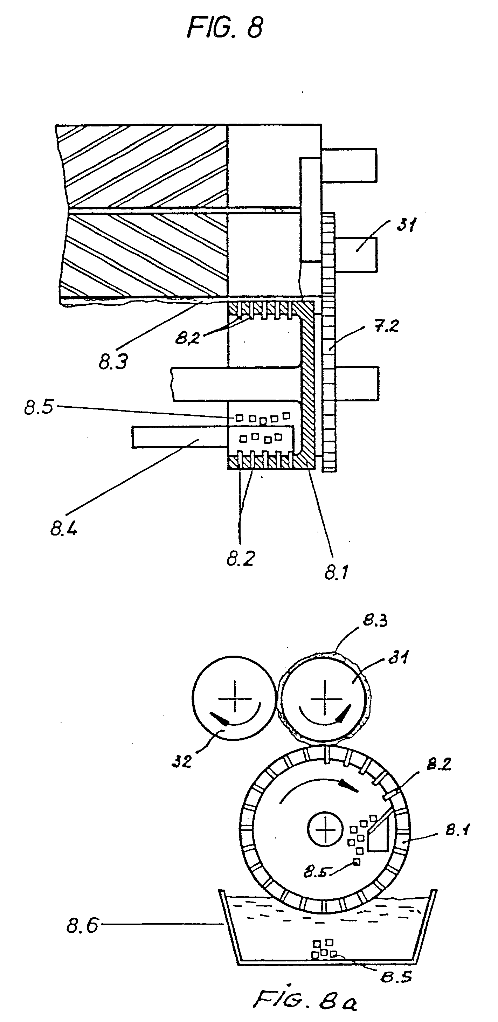

In einer anderen vorteilhaften Ausgestaltung, nach Fig. 8 und 8a, wird ein angetriebener Hohlzylinder 8.1 gegen die plastische Materialschicht der Walze 31 gepresst. Der Mantelumfang des Zylinders 8.1 enthölt eine Vielzahl von Bohrungen 8.2, durch welche das plastische Material 8.3 in den offenen Innenraum hindurchgedrückt wird. Dort befindet sich ein gekühltes Messer 8.4, das die durchgepressten Stangenabschnitte als Zylindergranulat 8.5 abschneidet. Zur Kühlung von Hohlzylinder 8.1 und darin befindlichem Granulatmaterial läuft der äussere Mantel durch eine mit Wasser oder sonstigem Kühlmittel gefüllten Schale 8.6.

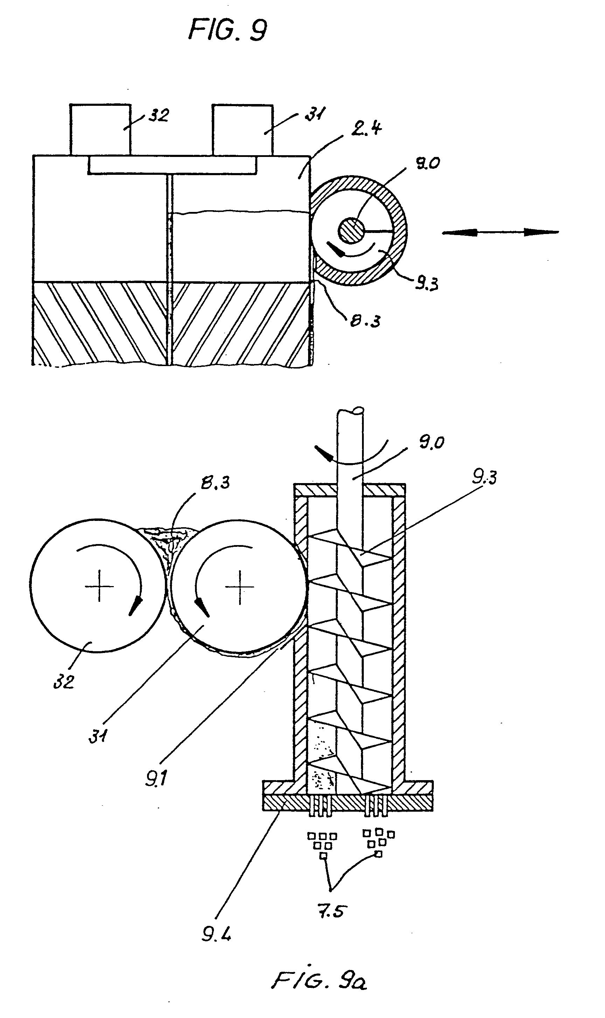

In einer weiteren Variante erfolgt die Abnahme von zähplastischen und sehr klebrigen Materialien 8.3 von der Walze 31 mit einer Abnahme- und Ausformschnecke 9.0, wie die Fig. 9 und 9a näher zeigen. Sie wird von aussen mit ihrer angepassten Zylinderöffnung 9.1 senkrecht bis auf einen kleinen Abstand zur materialbedeckten Walze 31 angeordnet. Die Stege 9.3 der rotierenden Schnecke 9.0 schaben plastisches Material 8.3 vom glatten Walzenabschnitt 2.4 herunter und führen es einer Ausformmatritze 9.4 zu. Dort wird es dann mit bekannten Granulier- oder Profiliereinrichtungen weiterverarbeitet.

## Patentansprüche

1. Kontinuierliches Misch- und Scherwalzwerk für plastifizierbares Material mit zwei, mit unterschiedlicher Umfangsgeschwindigkeit gegenläufig rotierenden temperierten Walzen (31, 32), deren Walzenlänge mehr als das Vierfache des Walzendurchmessers beträgt und auf denen im spitzen Winkel zu den Walzenachsen scharfkantige Nuten (35, 36) gegenläufig zueinander angeordnet sind, wobei die Zahl der Nuten (35, 36) auf dem Walzenumfang und die Tiefe der Nuten (35, 36) entlang den Walzenachsen von der Lagerseite mit der Materialaufgabe (2.1) bis zur Walzenmitte zunimmt und von dort bis zur Lagerseite mit der Materialabnahme (2.4) wieder abnimmt und mit Materialaufgabe- und -abnahmevorrichtungen, die in axialer Richtung entlang dem Walzenspalt (37) verstellbar und für verschiedene Materialtypen und Zugabestoffe geeignet sind, dadurch gekennzeichnet, dass das Drehzahlverhältnis der beiden Walzen (31, 32) im Zeitrhythmus von 5 bis 50 Sekunden im Verhältnis von maximal 5:1 bis maximal 1:5 periodisch geändert wird.

2. Kontinuierliches Misch- und Scherwalzwerk nach Anspruch 1, dadurch gekennzeichnet, dass in Anpassung an das Aufschmelzverhalten des Materials (8.3) die beiden Walzen (31, 32) über die Innentemperierung (1.11, 1.12, 1.21, 1.22, 1.31, 1.32) und über die äussere Strahlungsheizung (1.13, 1.23) auf verschiedene Temperaturhöhen entlang der Ballenlänge der Walzen (31, 32) temperiert sind.

3. Kontinuierliches Misch- und Scherwalzwerk nach Anspruch 1 und 2, dadurch gekennzeichnet, dass die materialbedeckte vordere Walze (31) über die Ballenlänge eine Nutgeometrie erhält, bei der in der Materialaufgabezone (2.1) mit etwa 30% der Ballenlänge die Nuten (35) besonders tief geschnitten sind, in der Mittelzone (2.2) mit etwa 35% der Ballenlänge die Nuten (35) kernprogressiv auf die flache Nuttiefe der Homogenisierungszone (2.3) — etwa auf den halben Wert — reduziert sind, und in der, auf die Homogenisierungszone (2.3) mit etwa 25% der Ballenlänge folgende Abnahmezone (2.4) des Materials, beide Walzen (31, 32) auf eine Ballenlänge von etwa 10% ohne Nuten (35, 36) ausgeführt sind.

4. Kontinuierliches Misch- und Scherwalzwerk nach einem der Ansprüche von 1 bis 3, dadurch gekennzeichnet, dass die glatten Stegflächen (38) zwischen den Nuten (35, 36) insbesondere auf der materialbedeckten vorderen Walzen (31) in der Materialaufgabezone (2.1) und in der Mittelzone (2.2) mit einer Vielzahl von flachen Sacklöchern (3.1) versehen sind.

5. Kontinuierliches Misch- und Scherwalzwerk nach einem der Ansprüche von 1 bis 4, dadurch gekennzeichnet, dass die hintere Walze (32) mit ein oder mehreren kurzen Gegenförderzonen (4.1, 4.2) von ca. 0,25 bis 1 Walzendurchmesser Länge zwischen eingelagerten Abschnitten (4.3) mit starker Förderwirkung ausgerüstet ist.

6. Kontinuierliches Misch- und Scherwalzwerk nach einem der Ansprüche von 1 bis 5, dadurch gekennzeichnet, dass für die vordere Walze (31) und für die hintere Walze (32) auf den temperierten Walzenkernen jeweils axial Mantelsegmente (4.1, 4.2, 4.3, 4.4) aufgereiht sind, die hinsichtlich Länge, Nuttiefe und Nutsteigung unterschiedlich ausgebildet sind.

7. Kontinuierliches Misch- und Schwewalzwerk nach einem der Ansprüche von 1 bis 6, dadurch gekennzeichnet, dass das in der Abnahmezone (2.4) streifenförmig ankommende Material (8.3) von einer gegengestellten, angetriebenen und gekühlten Abnahmewalze (7) übernommen wird, die so ausgebildet ist, dass sie als Gegenlager für eine gleichfalls mitangetriebene Schneidwalzenvorrichtung dient, und dass die Rundmesser (7.6) das Material (8.3) in schmale Längsstreifen (7.1) trennen, die durch eine Querschneidvorrichtung (7.4) nachfolgend zu Würfelgranulat (7.5) zerschnitten werden.

8. Kontinuierliches Misch- und Scherwalzwerk nach einem der Ansprüche von 1 bis 6, dadurch gekennzeichnet, dass das in der Abnahmezone (2.4) ankommende Material (8.3) mittels eines gegengestellten, zusätzlich gekühlten Granulierzylinders (8.1) durch Bohrungen (8.2) am Zylindermantel gepresst und auf der Innenseite durch Abschneidmesser (8.4) zu Zylindergranulat (8.5) geschnitten wird.

9. Kontinuierliches Misch- und Scherwalzwerk nach einem der Ansprüche von 1 bis 6, dadurch gekennzeichnet, dass das in der Abnahmezone (2.4) ankommende Material (8.3) von einer rotierenden Schnecke (9.0) abgenommen und in einen Schneckenzylinder (9.1) überführt wird um dann durch eine Ausformvorrichtung (9.4) ausgepresst zu werden, und dass die Schnecke (9.0) und der Schneckenzylinder (9.1) von aussen im senkrechten Winkel gegen die vordere Walze (31) gestellt sind.

## Claims

1. Continuous mixing and shearing rolling mill for plasticisable material with two tempered rolls (3, 32) which rotate in opposite directions at differing peripheral speed, the length of said rolls being more than four times the roll diameter and said rolls having arranged on them sharpedged grooves (35, 36) running in opposite directions from one another at an acute angle to the roll axes, whereby the number of grooves (35, 36) on the circumference of the rolls and the depth of the grooves (35, 36) along the axes of the rolls increases from the bearing side with the material feed (2.1) to the middle of the rolls and from there, decreases again to the bearing side with the removal of material (2.4), and with devices for feeding and removing the material, said devices being adjustable in an axial direction along the roll gap (37) and being suitable for various types of material and additions, characterised in that the speed ratio of the two rolls (31, 32) is altered periodically in the ratio of 5:1 up to a maximum of 1:5 in a time rhythm of 5 to 50 seconds.

2. Continuous mixing and shearing rolling mill as claimed in Claim 1, characterised in that to suit the melting behaviour of the material (8.3) the two rolls (31, 32) are tempered through the inner tempering (1.11, 1.12, 1.21, 1.22, 1.31, 1.32) and through the external radiation heating (1.13, 1.23) to different temperature levels along the surface length of the rolls (31, 32).

3. Continuous mixing and shearing rolling mill as claimed in Claims 1 and 2, characterised in that the front roll (31) which is covered with material is given a groove geometry along the surface length of the roll, with which in the material-feed zone (2.1), with about 30% of the surface length the grooves (35) are cut particularly deep, in the middle zone (2.2) with about 35% of the surface length, the grooves (35) are reduced progressively with the core to the flat groove depth of the homogenising zone (2.3) — approximately to half the value —, and in the take-off zone (2.4) of the material, which follows the homogenising zone (2.3) with about 25% of the surface length, both rolls (31, 32) are executed without grooves (35, 36) over a surface length of about 10%.

4. Continuous mixing and shearing rolling mill as claimed in one of the Claims from 1 to 3, characterised in that the smooth crosspiece surfaces (38) between the grooves (35, 36), particularly on the front roll (31) which is covered with material in the material-feed zone (2.1) and in the middle zone (2.2), are provided with a plurality of flat blind holes (3.1).

5. Continuous mixing and shearing rolling mill as claimed in one of the Claims from 1 to 4, characterised in that the rear roll (32) is equipped with one or several short counter-conveying zones (4.1, 4.2) of about 0.25 to 1 roll diameter in length between interposed sections (4.3) with a strong conveying action.

6. Continuous mixing and shearing rolling mill as claimed in one of the Claims from 1 to 5, characterised in that for the front roll (31) and for the rear roll (32), on the tempered roll bodies, axial surface segments (4.1, 4.2, 4.3, 4.4) are lined up which are designed differently as regards length, depth of groove and slope of groove.

7. Continuous mixing and shearing rolling mill as claimed in one of the Claims from 1 to 6, characterised in that in the take-off zone (2.4) material (8.3) arriving in stripform is taken over by a counter-positioned, driven and cooled take-off roll (7) which is designed such that it serves as a counterbearing for a cutter rolling device which is also driven with this, and in that the circular blades (7.6) divide the material (8.3) into narrow longitudinal strips (7.1) which are subsequently cut up by a transverse cutting device (7.4) into cube-shaped granulates (7.5).

8. Continuous mixing and shearing rolling mill as claimed in one of the Claims from 1 to 6, characterised in that material (8.3) arriving in the take-off zone (2.4) is pressed by means of a counter-positioned, additionally cooled granulating cylinder (8.1) through bores (8.2) on the cylinder surface and is cut on the inside by cutting blades (8.4) into cylindrical granulates (8.5).

9. Continuous mixing and shearing rolling mill as claimed in one of the Claims from 1 to 6, characterised in that material (8.3) arriving in the take-off zone (2.4) is taken off by a rotating worm (9.0) and transferred into a spiral cylinder (9.1) in order then to be pressed out through a forming-out device (9.4), and in that the worm (9.0) and the spiral cylinder (9.1) are positioned from outside at a perpendicular angle in relation to the front roll (31).

## Revendications

1. Train continu pour mélange et laminage avec cisaillement pour matière pouvant être plastifiée, comprenant deux cylindres chauffés (31, 32) tournant en sens contraire à des vitesses périphériques différentes, cylindres dont la longueur est supérieure au quadruple du diamètre et sur lesquels sont disposées des cannelures (35, 36) à arêtes vives orientées en sens opposé mutuel en formant un angle aigu avec les axes des cylindres, le nombre de ces cannelures (35, 36) sur le pourtour des cylindres et la profondeur desdites cannelures (35, 36) le long des axes des cylindres entre le côté du palier comprenant l'introduction de la matière (2.1) et le centre du cylindre augmentant et diminuant à nouveau à partir de là jusqu'au côté du palier comportant la sortie de matière (2.4), et comportant des dispositifs d'introduction et de sortie de la matière qui sont réglables en direction axiale le long de l'interstice (37) entre les cylindres et appropriés pour différents types de matière et d'additifs, caractérisé par le fait que le rapport entre les vitesses de rotation des deux cylindres (31, 32) se modifie périodiquement à une cadence de 5 à 50 sec entre un maximum de 5:1 jusqu'à un maximum de 1:5.

2. Train continu de mélange et de laminage avec cisaillement selon la revendication 1, caractérisé par le fait qu'en adéquation au comportement de fusion de la matière (8.3) les deux cylindres (31, 32) sont amenés à des niveaux thermiques différents le long de la longueur de la table des cylindres (31, 32) au moyen d'un chauffage interne (1.11, 1.12, 1.21, 1.22, 1.31, 1.32) et par l'intermédiaire du chauffage extérieur par rayonnement (1.13, 1.23).

3. Train continu de mélange et de laminage avec cisaillement selon les revendications 1 et 2, caractérisé par le fait que le cylindre avant (31) recouvert de matière reçoit sur la longueur de la table des cannelures d'une géométrie telle que dans la zone d'introduction de la matière (2.1) comportant environ 30% de la longueur de la table, les cannelures (35) sont particulièrement profondes, dans la zone centrale (2.2) représentant environ 35% de la longueur de la table, que les cannelures (35) se réduisent progressivement en direction de la zone d'homogénéisation (2.3) plane, jusqu'à présenter une profondeur égale à environ la moitié, et dans la zone de sortie (2.4) de la matière faisant suite à la zone d'homogénéisation (2.3) et égale à environ 25% de la longueur de la table, les deux cylindres (31, 32) étant totalement dépourvus de cannelures (35, 36) sur une longueur de la table d'environ 10%.

4. Train continu de mélange et de laminage avec cisaillement selon l'une des revendications 1 à 3, caractérisé par le fait que les surfaces lisses (38) entre les cannelures (35, 36), en particulier sur le cylindre (31) recouvert de matière, sont munies dans la zone d'introduction de la matière (2.1) et dans la zone centrale (2.2) d'une pluralité de trous borgnes plats (3.1).

5. Train continu de mélange et de laminage avec cisaillement selon l'une des revendications 1 à 4, caractérisé par le fait que le cylindre arrière (32) est équipé d'une ou de plusieurs zones courtes (4.1, 4.2) de contre-poussée d'une longueur égale à environ 0,25 à 1 diamètre de cylindre placées entre des segments cannelés (4.3) à effet de poussée puissant.

6. Train continu de mélange et de laminage avec cisaillement selon l'une des revendications 1 à 5, caractérisé par le fait que pour le cylindre avant (31) et pour le cylindre arrière (32) sont montés en série, respectivement axialement, sur les noyaux chauffés des cylindres, des segments latéraux (4.1, 4.2, 4.3, 4.4), ces segments étant différents entre eux en ce qui concerne leur longueur, la profondeur et la progression des cannelures.

7. Train continu de mélange et de laminage avec cisaillement selon l'une des revendications 1 à 6, caractérisé par le fait que la matière (8.3) arrivant dans la zone de sortie (2.4) sous forme de bande est reprise par un cylindre (7) contre-positionné, entraîné et refroidi, qui est réalisé de manière à servir de contre-palier pour un dispositif à cylindre de coupe coentraîné simultanément, et par le fait que les couteaux circulaires (7.6) coupent la matière (8.3) en bandes (7.1) longitudinales étroites pour être transformées ensuite en granulés de forme cubique au moyen d'un dispositif de coupe transversal (7.4).

8. Train continu de mélange et de laminage avec cisaillement, selon l'une des revendications 1 à 6, caractérisé par le fait que la matière (8.3) arrivant dans la zone de sortie (2.4) est pressée, au moyen d'un cylindre de granulation (8.1) contre-positionné et refroidi secondairement, par des perçages (8.2) présents sur l'enveloppe de ce cylindre et coupée sur le côté interne pour être transformée en granulés de forme cylindrique (8.5) au moyen d'un couteau (8.4).

9. Train continu de mélange et de laminage avec cisaillement selon l'une des revendications 1 à 6, caractérisé par le fait que la matière (8.3) arrivant dans la zone de sortie (2.4) est reprise par une vis sans fin (9.0) en rotation et transférée dans un cylindre hélicoïdal (9.1) afin d'être ensuite extrudée par un dispositif d'extrusion (9.4), et par le fait que la vis sans fin (9.0) et le cylindre hélicoïdal (9.1) sont placés de manière à former à l'extérieur un angle droit avec le cylindre avant (31).

## FIG. 1

## FIG. 2

## FIG. 2a

## FIG. 3

## FIG. 3.a

## FIG. 4

## FIG. 4a

0 231 398

FIG. 5

8.3
31
32
37

8.3
4.3
36
4.2
B
35
4.3
8.3
4.1
A
4.3
36
32
31
37

FIG. 5a

17

# FIG. 6

# FIG. 6a

## FIG. 7

## FIG. 7a

0 231 398

## FIG. 8

## FIG. 8a

## FIG. 9

## FIG. 9a